# EUROPÄISCHE PATENTSCHRIFT

(11) **EP 2 525 163 B1**
(45) Veröffentlichungstag und Bekanntmachung des Hinweises auf die Patenterteilung: **05.11.2014**
(21) Anmeldenummer: 11004081.3
(22) Anmeldetag: 17.05.2011
(51) Int. Cl.: F24J 2/52

(54) **Trägereinheit für Solarmodule**
Carrier unit for solar modules
Unité de transport pour module solaire

(43) Veröffentlichungstag der Anmeldung: 21.11.2012
(73) Patentinhaber: Renusol GmbH, 51063 Köln (DE)
(72) Erfinder: Leusink, Art Elbertus, 30327 Atlanta, GA (US); Coppens, Wim, 58256 Ennepetal (DE)
(74) Vertreter: Graf von Stosch, Andreas

(56) Entgegenhaltungen:
- WO-A2-2010/097406
- DE-A1-102009 019 548
- DE-U1-202008 014 174

## Beschreibung

Die Erfindung betrifft eine Trägereinheit zur Montage von mindestens einem Solarmodul sowie eine Anordnung von mehreren Trägereinheiten. Des Weiteren betrifft die Erfindung ein Verfahren zum Aufstellen von Trägereinheiten, welche zur Montage von mindestens einem Solarmodul ausgelegt sind.

DE-A-202008014174 offenbart eine Trägereinheit gemäß dem oberbegriff des Anspruchs 1.

Es ist Aufgabe der Erfindung, die Standfestigkeit und Stabilität von Trägereinheiten zur Montage von mindestens einem Solarmodul zu verbessern.

Die Aufgabe wird durch eine Trägereinheit gemäß Anspruch 1 und ein Verfahren zum Aufstellen von Trägereinheiten gemäß Anspruch 15 gelöst. Vorteilhafte Weiterbildungen sind in den Unteransprüchen 2-14 und 16 aufgeführt.

Eine erfindungsgemäße Trägereinheit dient zur Montage von mindestens einem Solarmodul. Die Trägereinheit umfasst eine Grundplatte sowie ein rückwärtiges Wandelement, zwei seitliche Wandelemente sowie ein vorderes Wandelement, welche die Grundplatte umschließen, wobei die Grundplatte zusammen mit dem rückwärtigen Wandelement, den seitlichen Wandelementen und dem vorderen Wandelement einen wannenförmigen Innenbereich zur Aufnahme von Beschwermaterial bildet. Das rückwärtige Wandelements, die seitlichen Wandelemente und das vordere Wandelement bilden zusammen eine geneigte Auflagefläche zur Montage des mindestens einen Solarmoduls. Dabei sind die Wandelemente als nach unten offene Hohlformkörper ausgebildet, welche jeweils eine Innenwand und eine beabstandet zur Innenwand angeordnete Außenwand umfassen.

Die erfindungsgemäße Trägereinheit ermöglicht eine geneigte Montage von Solarmodulen. Durch die geneigte Auflagefläche ist ein hoher Wirkungsgrad bei der Umsetzung von Sonnenstrahlung in elektrische oder thermische Energie ermöglicht. Durch die Befüllung mit Beschwermaterial wird eine gute Standfestigkeit erzielt. Diese gute Standfestigkeit wird weiter erhöht, indem die Wandelemente der Trägereinheit als nach unten offene Hohlformkörper ausgebildet werden. Diese Hohlformkörper bieten eine große Standfläche und ermöglichen so ein besonders stabiles Aufliegen der Trägereinheit auf dem jeweiligen Untergrund.

Wenn Wind an der mindestens einen Lüftungsöffnung vorbeiströmt, baut sich im Inneren der Trägereinheit ein Unterdruck auf, der die Trägereinheit zusätzlich gegen den Untergrund drückt. Durch diese aerodynamisch besonders günstige Bauform, die durch das vorteilhafte Zusammenwirken der Wandelemente, die als nach unten offene Hohlformkörper ausgebildet sind, mit den Lüftungsöffnungen gekennzeichnet ist, entsteht unterhalb der Trägereinheit ein Unterdruck, der die Trägereinheit insbesondere bei Wind stabilisiert und gegen den Untergrund drückt. Dadurch wird die Standfestigkeit der Trägereinheit stark verbessert.

Es zeigen:
- Fig. 1: eine Ansicht einer erfindungsgemäßen Trägereinheit schräg von vorn;
- Fig. 2: eine Ansicht einer Trägereinheit schräg von hinten;
- Fig. 3: eine Seitenansicht einer Trägereinheit;
- Fig. 4: eine Draufsicht auf eine Trägereinheit;
- Fig. 5A, 5B: die Verbindung von zwei Trägereinheiten mittels Schraubverbindungen;
- Fig. 6: eine Draufsicht auf zwei durch Nietverbindungen verbundene Trägereinheiten;
- Fig. 7: das Einbringen von Beschwermaterial in den wannenförmigen Innenbereich einer Trägereinheit und in den Zwischenbereich zwischen zwei Trägereinheiten;
- Fig. 8: die Montage eines Solarmoduls auf einer erfindungsgemäßen Trägereinheit; und
- Fig. 9A, 9B: eine Darstellung der zur Montage des Solarmoduls verwendeten Längsträger.

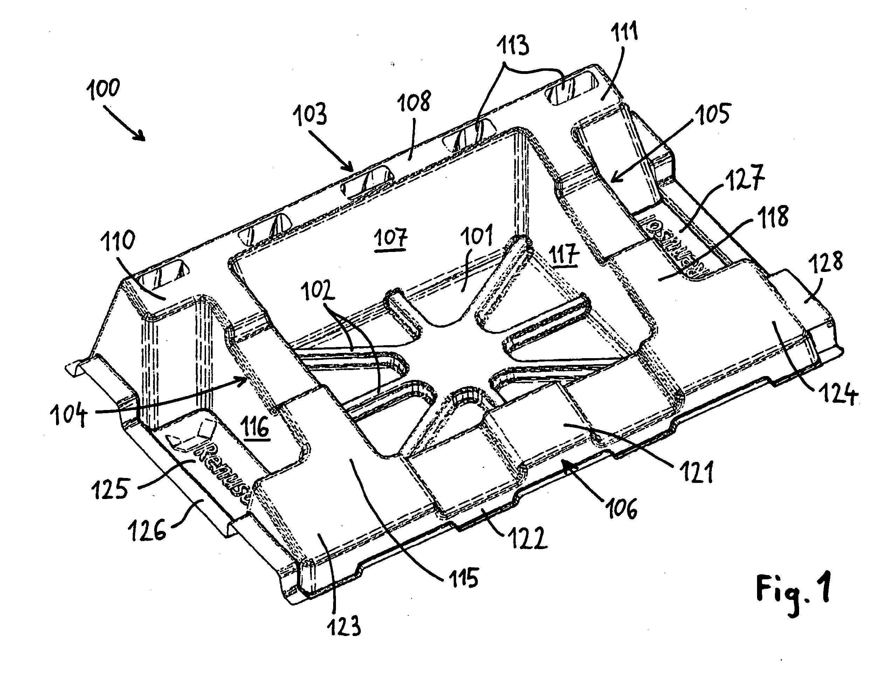

Fig. 1 zeigt eine erfindungsgemäße Trägereinheit 100, die zur Halterung von Solarmodulen ausgelegt ist. Die Trägereinheit 100 kann beispielsweise zur Montage von Solarmodulen auf einem Flachdach eingesetzt werden. Hierzu wird die Trägereinheit 100 auf das Flachdach gestellt und mit einem Beschwermaterial wie beispielsweise Beton, Steine, Sand, Kies, etc. beschwert. Anschließend wird mindestens ein Solarmodul auf die schräg geneigte Auflagefläche der Trägereinheit 100 gelegt und mit Hilfe von geeigneten Befestigungselementen an der Trägereinheit 100 befestigt.

Bei den Solarmodulen kann es sich beispielsweise um photovoltaische Solarmodule handeln, die zur Erzeugung elektrischer Energie ausgelegt sind. Alternativ dazu kann es sich auch um Wärmekollektoren handeln, welche Wasser oder ein anderes Medium mit Hilfe der Sonnenstrahlung aufheizen. Durch die schräg geneigte Lagerung der Solarmodule wird das einfallende Sonnenlicht mit hohem Wirkungsgrad in elektrische oder thermische Energie umgesetzt.

Die erfindungsgemäße Trägereinheit 100 wird vorzugsweise als einstückiges Formteil aus Kunststoff hergestellt, und zwar vorzugsweise mittels mindestens einem von Spritzgießen und Vakuumformen. Vorzugsweise wird die Trägereinheit 100 aus wiederverwertbarem chlorfreiem Polyethylen hergestellt. Polyethylen eignet sich gut für die Herstellung von Formteilen mittels Spritzgießen und Vakuumformen.

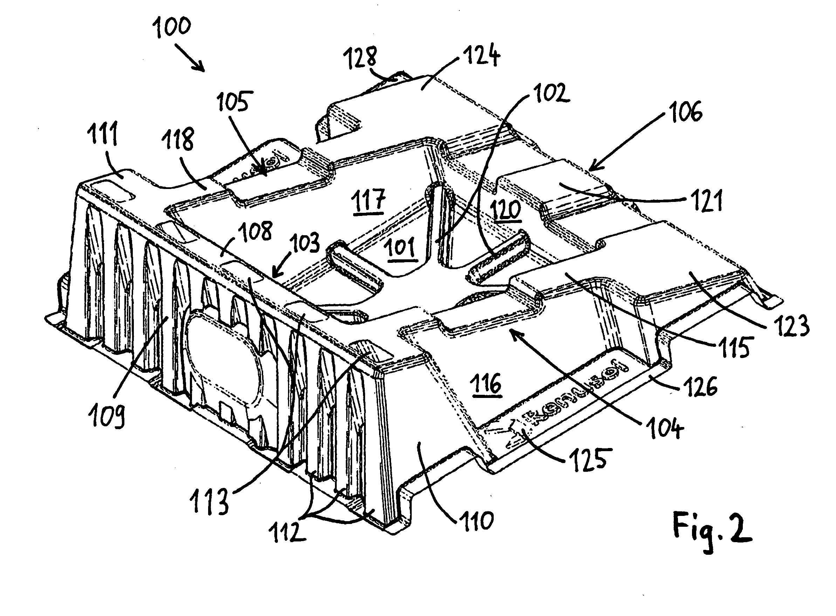

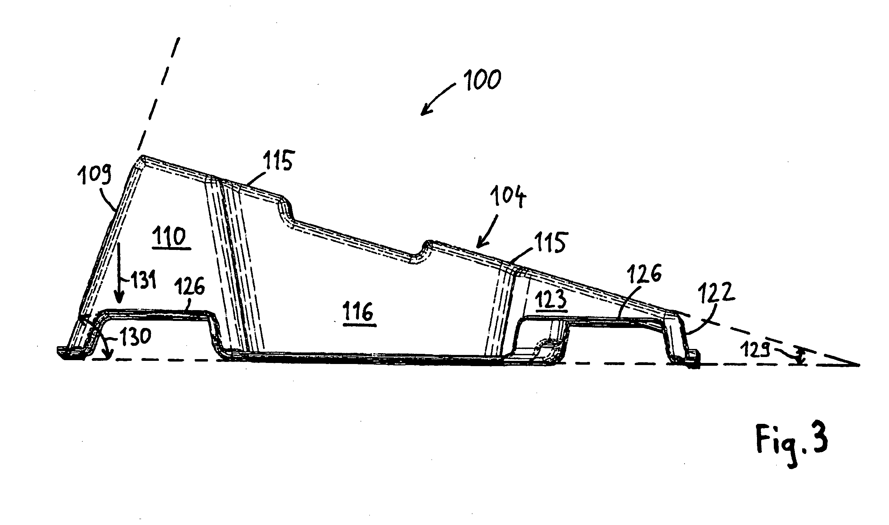

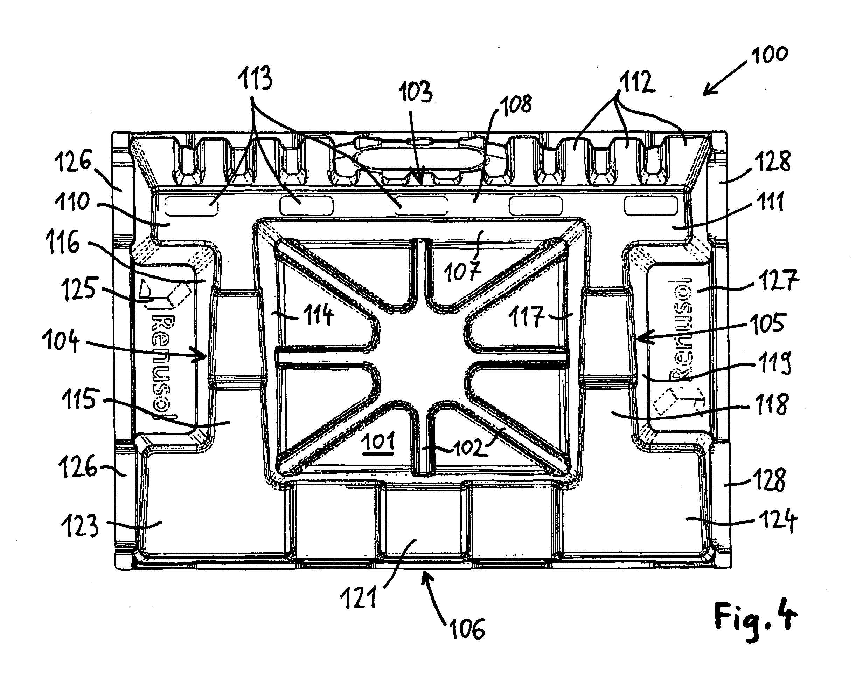

In den Fig. 1, 2, 3, 4 sind verschiedene Ansichten einer erfindungsgemäßen Trägereinheit 100 gezeigt. Fig. 1 zeigt eine Ansicht der Trägereinheit 100 schräg von vorn, Fig. 2 zeigt eine Ansicht der Trägereinheit 100 schräg von hinten. Fig. 3 zeigt eine Seitenansicht der Trägereinheit 100, und Fig. 4 zeigt die Trägereinheit 100 in Draufsicht von oben. In den vier Figuren 1 bis 4 werden zur Bezeichnung der verschiedenen Abschnitte der erfindungsgemäßen Trägereinheit durchgängig dieselben Bezugszeichen verwendet. Allerdings sind die beschriebenen Teilabschnitte nicht in allen Figuren zu erkennen, manchmal sind sie verdeckt.

Die Trägereinheit 100 umfasst eine Grundplatte 101, mit der die Trägereinheit auf dem Untergrund aufliegt. Zur Verstärkung der Grundplatte 101 sind Verstärkungselemente 102 vorgesehen, die beispielsweise in Fig.1 als sternförmig zusammenlaufende Rippen ausgebildet sind. Die Grundplatte 101 wird von einem rückwärtigen Wandelement 103, von seitlichen Wandelementen 104, 105 und von einem vorderen Wandelement 106 umschlossen. Die Wandelemente 103-106 sind jeweils als Hohlformkörper ausgebildet, welche jeweils eine Innenwand und Außenwand umfassen, wobei die Außenwand beabstandet zur Innenwand angeordnet ist.

Die Grundplatte 101 wird ringsum von dem rückwärtigen Wandelement 103, den seitlichen Wandelementen 104, 105 und dem vorderen Wandelement 106 umschlossen. Durch die Grundplatte 101 zusammen mit den Innenwänden des rückwärtigen Wandelements 103, der seitlichen Wandelemente 104, 105 und des vorderen Wandelements 106 wird in der Trägereinheit 100 ein wannenförmiger Innenbereich gebildet. In diesen Innenbereich können Beschwerungssteine, Sand, Kies oder ein anderes Material eingebracht werden, um die Trägereinheit 100 zu beschweren und dadurch auf dem jeweiligen Untergrund zu fixieren, beispielsweise auf dem Flachdach.

Das rückwärtige Wandelement 103 umfasst eine Innenwand 107, einen rückwärtigen Auflagesteg 108 sowie eine Außenwand 109. Die Innenwand 107 ist mit der Grundplatte 101 einstückig verbunden. Der rückwärtige Auflagesteg 108 verbindet die Innenwand 107 und die Außenwand 109 des rückwärtigen Wandelements 103. Dabei ist der rückwärtige Auflagesteg 108 sowohl mit der Innenwand 107 als auch mit der Außenwand 109 einstückig verbunden. Das rückwärtige Wandelement 103 ist daher als nach unten offener Hohlformkörper ausgebildet.

An der von vorne gesehen linken Seite der Trägereinheit 100 ist ein linker Fortsatz 110 an das rückwärtige Wandelement 103 angeformt. In ähnlicher Weise ist an der rechten Seite der Trägereinheit 100 ein rechter Fortsatz 111 an das rückwärtige Wandelement 103 angeformt. Durch die beiden Fortsätze 110, 111 wird das rückwärtige Wandelement 103 über die seitlichen Wandelemente 104, 105 hinaus verlängert, was die Standfestigkeit der Trägereinheit 100 zusätzlich verbessert.

Insbesondere in Fig. 2 ist die Außenwand 109 des rückwärtigen Wandelements 103 gut zu erkennen. Es ist zu sehen, dass die Außenwand 109 gegenüber dem Untergrund nach innen geneigt ist. Durch diese Neigung der Außenwand 109 wird die Standfläche der Trägereinheit 100 zusätzlich vergrößert, und die Stabilität der Anordnung wird verbessert. Wenn Windböen seitlich auf die Trägereinheit 100 auftreffen, wird durch die Windböen infolge der Neigung der Außenwand 109 zusätzlich zu der seitlich wirkenden Kraft auch eine nach unten gerichtete Kraft auf die Trägereinheit 100 ausgeübt. Diese infolge der Neigung der Außenwand 109 entstehende Kraftkomponente drückt die Trägereinheit 100 gegen den Untergrund. Wenn Windböen auftreten, trägt diese Kraftkomponente zur Verbesserung der Standfestigkeit der Trägereinheit 100 bei.

In Fig. 2 ist darüber hinaus zu erkennen, dass entlang der Außenwand 109 des rückwärtigen Wandelements 103 eine Vielzahl von Verstärkungsstrukturen 112 angeordnet sind, beispielsweise in Form von Rippen oder Aussparungen. Durch diese Verstärkungsstrukturen 112 wird die mechanische Stabilität der Trägereinheit 100 deutlich vergrößert. Insbesondere wird durch diese Verstärkungsstrukturen 112 verhindert, dass die Trägereinheit 100 durch die Last der darauf montierten Solarmodule zusammengedrückt wird.

Entlang des rückwärtigen Auflagestegs 108 sind eine Mehrzahl von Lüftungsöffnungen 113 angeordnet. Durch diese Lüftungsöffnungen 113 wird ein Luftaustausch zwischen der unterhalb der Trägereinheit 100 eingeschlossenen Luft und der Außenluft ermöglicht. Da das rückwärtige Wandelement 103 als nach unten offener Hohlformkörper ausgebildet ist, befinden sich die Lüftungsöffnungen 113 direkt über dem Untergrund, beispielsweise dem Flachdach. Wenn Wind über die Lüftungsöffnungen 113 streicht, wird die Luft an der Oberkante des rückwärtigen Wandelements 103 verwirbelt und es bildet sich an den Lüftungsöffnungen 113 ein Unterdruck aus. Da die Lüftungsöffnungen 113 über die als Hohlformkörper ausgebildete rückwärtige Wandelement 103 direkt mit der Dachoberfläche in Verbindung stehen, wirkt der Unterdruck direkt auf die Dachoberfläche ein. Als Folge davon baut sich innerhalb der Trägereinheit 100 ein Unterdruck auf. Durch diesen Unterdruck innerhalb der Trägereinheit 100 wird die Trägereinheit 100 zusätzlich gegen den Untergrund gedrückt. Durch diesen Effekt wird die Standfestigkeit der Trägereinheit 100 insbesondere bei Wind zusätzlich erhöht.

Das von vorne gesehen linke Wandelement 104 umfasst eine Innenwand 114, einen linken Auflagesteg 115 sowie eine Außenwand 116. Die Innenwand 114 des linken Wandelements 104 ist mit der Grundplatte 101 einstückig verbunden. Der linke Auflagesteg 115 verbindet die Innenwand 114 mit der Außenwand 116. Der linke Auflagesteg 115 ist von hinten nach vorne hin schräg abfallend ausgebildet, so dass eine schräge Auflagefläche für das Solarmodul entsteht. Der linke Auflagesteg 115 weist eine Ausnehmung auf, die eine gewisse Hinterlüftung der Solarmodule ermöglicht. Der linke Auflagesteg 115 ist sowohl mit der Innenwand 114 als auch mit der Außenwand 116 einstückig verbunden. Das linke Wandelement 104 ist daher als nach unten offener Hohlformkörper ausgebildet.

Das das von vorne gesehen rechte Wandelement 105 umfasst eine Innenwand 117, einen rechten Auflagesteg 118 sowie eine Außenwand 119. Die Innenwand 117 des rechten Wandelements 105 ist mit der Grundplatte 101 einstückig verbunden. Der rechte Auflagesteg 118 verbindet die Innenwand 117 mit der Außenwand 119. Der rechte Auflagesteg 118 ist ebenso wie der linke Auflagesteg 115 von hinten nach vorne hin schräg abfallend ausgebildet und weist ebenfalls eine Ausnehmung auf, die eine gewisse Hinterlüftung der Solarmodule ermöglicht. Der rechte Auflagesteg 118 ist sowohl mit der Innenwand 117 als auch mit der Außenwand 119 einstückig verbunden. Das rechte Wandelement 105 ist daher ebenfalls als nach unten offener Hohlformkörper ausgebildet.

Das vordere Wandelement 106 umfasst eine Innenwand 120, einen vorderen Auflagesteg 121 sowie eine Außenwand 122. Die Innenwand 120 des vorderen Wandelements 106 ist mit der Grundplatte 101 einstückig verbunden. Der vordere Auflagesteg 121 verbindet die Innenwand 120 mit der Außenwand 122. Dabei ist der vordere Auflagesteg 121 sowohl mit der Innenwand 120 als auch mit der Außenwand 122 einstückig verbunden. Das vordere Wandelement 106 ist daher ebenfalls als nach unten offener Hohlformkörper ausgebildet. Der vordere Auflagesteg 121 weist zwei Ausnehmungen auf, die zum Luft- und Wärmeaustausch unterhalb des mindestens einen Solarmoduls beitragen.

An der von vorne gesehen linken Seite der Trägereinheit 100 ist ein linker Fortsatz 123 an das vordere Wandelement 106 angeformt. In ähnlicher Weise ist an der rechten Seite der Trägereinheit 100 ein rechter Fortsatz 124 an das vordere Wandelement 106 angeformt. Durch die beiden Fortsätze 123, 124 wird das vordere Wandelement 106 über die seitlichen Wandelemente 104, 105 hinaus verlängert. Dadurch wird die Standfestigkeit der Trägereinheit 100 zusätzlich verbessert. Durch den rückwärtigen Auflagesteg 108, die seitlichen Auflagestege 115, 118 und den vorderen Auflagesteg 121 wird eine schräg geneigte Auflagefläche für das mindestens eine Solarmodul gebildet. Auf diese Auflagefläche der Trägereinheit 100 wird ein zu montierendes Solarmodul aufgelegt und mit Hilfe geeigneter Befestigungselemente fixiert.

An der linken Außenseite der Trägereinheit 100 ist außerhalb des linken Wandelements 104 eine Bodenplatte 125 an die Außenwand 116 des linken Wandelements 104 angeformt. Diese Bodenplatte 125 erstreckt sich vom linken Wandelement 104 aus nach außen.

Diese außen angeformte Bodenplatte 125 bildet zusammen mit einer entsprechend ausgebildeten Bodenplatte einer benachbarten Trägereinheit eine gemeinsame Auflagefläche für Beschwermaterial im Zwischenbereich zwischen den beiden Trägereinheiten. Durch dieses zusätzliche Beschwermaterial, das in den Zwischenbereich zwischen die zwei benachbarten Trägereinheiten eingebracht wird, wird die Stabilität der Trägereinheit weiter verbessert. Vorzugsweise ist die Bodenplatte 125 zwischen dem Fortsatz 110 des rückwärtigen Wandelements 103 und dem Fortsatz 123 des vorderen Wandelements 106 angeordnet. Auf diese Weise wird die Bodenplatte 125 nach hinten hin durch den Fortsatz 110 des rückwärtigen Wandelements 103 und nach vorne hin durch den Fortsatz 123 des vorderen Wandelements 106 begrenzt.

An der linken Außenseite der Trägereinheit 100 ist darüber hinaus ein linker Verbindungsflansch 126 angeformt. Bei der in den Fig. 1 bis 4 gezeigten Ausführungsform ist der linke Verbindungsflansch 126 zum einen an die Fortsätze 110, 123 angeformt, zum anderen an die Bodenplatte 125. Der linke Verbindungsflansch 126 ist dazu ausgelegt, die Trägereinheit 100 auf der linken Seite mit einer benachbarten Trägereinheit zu verbinden. Hierzu ist die benachbarte Trägereinheit ebenfalls mit einem Verbindungsflansch ausgestattet. Gemäß einer bevorzugten Ausführungsform wird der linke Verbindungsflansch 126 der Trägereinheit 100 mittels einer oder mehreren Nietverbindungen mit dem Verbindungsflansch der benachbarten Trägereinheit verbunden. Alternativ dazu können die Verbindungsflansche der Trägereinheit auch durch Verschrauben oder Verklipsen mit dem Verbindungsflansch einer benachbarten Trägereinheit verbunden werden.

Wenn die Trägereinheit 100 auf ihrer linken Seite mit einer benachbarten Trägereinheit verbunden wird, bildet die Bodenplatte 125 der Trägereinheit 100 zusammen mit der Bodenplatte der benachbarten Trägereinheit eine gemeinsame Auflagefläche im Zwischenbereich zwischen den beiden Trägereinheiten. Diese gemeinsame Auflagefläche wird einerseits durch den Fortsatz 110 des rückwärtigen Wandelements 103 und den Fortsatz 123 des vorderen Wandelements 106 der Trägereinheit 100 begrenzt. Andererseits wird die gemeinsame Auflagefläche aber auch durch die Fortsätze des rückwärtigen und des vorderen Wandelements der benachbarten Trägereinheit begrenzt. Der gemeinsame Auflagebereich im Zwischenbereich zwischen den beiden Trägereinheiten ist somit von den Fortsätzen der Trägereinheit 100 und der benachbarten Trägereinheit zumindest zum Teil umschlossen. Durch die Fortsätze wird Beschwermaterial, das sich auf dem gemeinsamen Auflagebereich im Zwischenbereich zwischen den beiden Trägereinheiten befindet, am Herausrutschen gehindert und auf diese Weise im Zwischenbereich fixiert. Durch das zusätzliche Beschwermaterial im Zwischenbereich zwischen den beiden Trägereinheiten wird die Stabilität der Trägereinheiten verbessert.

An der rechten Außenseite der Trägereinheit 100 ist eine Bodenplatte 127 an die Außenwand 119 des rechten Wandelements 105 angeformt. Diese Bodenplatte 127 erstreckt sich vom rechten Wandelement 105 aus nach außen. Die Bodenplatte 127 ist vorzugsweise zwischen dem Fortsatz 111 des rückwärtigen Wandelements 103 und dem Fortsatz 124 des vorderen Wandelements 106 angeordnet. Auf diese Weise wird die Bodenplatte 127 nach hinten hin durch den Fortsatz 111 des rückwärtigen Wandelements 103 und nach vorne hin durch den Fortsatz 124 des vorderen Wandelements 106 begrenzt.

An der rechten Außenseite der Trägereinheit 100 ist darüber hinaus ein rechter Verbindungsflansch 128 angeformt. Der rechte Verbindungsflansch 128 ist zum einen an die Fortsätze 111, 124 angeformt, zum anderen an die Bodenplatte 127. Der rechte Verbindungsflansch 128 ist dazu ausgelegt, die Trägereinheit 100 auf der rechten Seite mit einer benachbarten Trägereinheit zu verbinden. Hierzu ist die benachbarte Trägereinheit ebenfalls mit einem Verbindungsflansch ausgestattet.

Vorzugsweise ist die gesamte Trägereinheit 100 als einstückiges Formteil ausgebildet, welches vorzugsweise aus Kunststoff hergestellt wird, vorzugsweise mittels Spritzgießen und Vakuumformen. Beim Stapeln einer Mehrzahl von Formteilen greifen die als Hohlkörper ausgebildeten Wandelemente ineinander. Durch die in Fig. 1 bis Fig. 4 gezeigte Formgebung der Trägereinheit 100 wird erreicht, dass die Trägereinheiten beim Aufeinanderstapeln vollständig ineinander geschoben werden können. Die Trägereinheiten sind somit als schachtelbare Formteile ausgebildet.

Fig. 3 zeigt eine Seitenansicht der erfindungsgemäßen Trägereinheit 100. Anhand von Fig. 3 lassen sich insbesondere die geometrischen Besonderheiten der erfindungsgemäßen Trägereinheit 100 erkennen.

In Fig. 3 ist das linke Wandelement 104 zu erkennen, wobei der linke Auflagesteg 115 des linken Wandelements 104 von hinten nach vorne hin schräg abfällt. Zu erkennen ist auch die Ausnehmung im linken Auflagesteg 115. Vorzugsweise ist der linke Auflagesteg 115 um einen Neigungswinkel 129 gegenüber der Horizontalen geneigt. Vorzugsweise ist der linke Auflagesteg 115 relativ zur Horizontalen um einen Winkel zwischen ca. 10° und 20° geneigt. Daher ist auch die Auflagefläche für das Solarmodul gegenüber dem Untergrund um einen Winkel von ca. 10° bis 20° geneigt. Durch die schräge Lagerung der Solarmodule wird ein höherer Wirkungsgrad bei der Umsetzung von Sonnenstrahlung in elektrische oder thermische Energie erzielt.

In Fig. 3 ist darüber hinaus die nach innen geneigte Außenwand 109 des rückwärtigen Wandelements 103 zu erkennen. Bei der gezeigten Ausführungsform schließt die Außenwand 109 des rückwärtigen Wandelements 103 mit der Horizontalen einen Winkel 130 ein, der vorzugsweise zwischen ca. 55° und 75° liegt. Durch die Neigung der Außenwand 109 nach innen wird die Standfläche, mit der die Trägereinheit 100 auf dem Untergrund aufliegt, im Vergleich zur Auflagefläche des Solarmoduls vergrößert. Dadurch wird die Standfestigkeit der Anordnung verbessert. Wenn Wind von der Seite her auf der schräg nach innen geneigten Außenwand 109 auftrifft, wird der Wind nach oben abgelenkt, übt dabei aber eine nach unten gerichtete Kraftkomponente 131 auf die Trägereinheit 100 aus, die in Fig. 3 mit eingezeichnet ist. Durch diese Kraftkomponente 131 wird die Trägereinheit 100 bei Wind zusätzlich gegen den Untergrund gedrückt, und dadurch wird die Standfestigkeit der Trägereinheit 100 bei Wind verbessert.

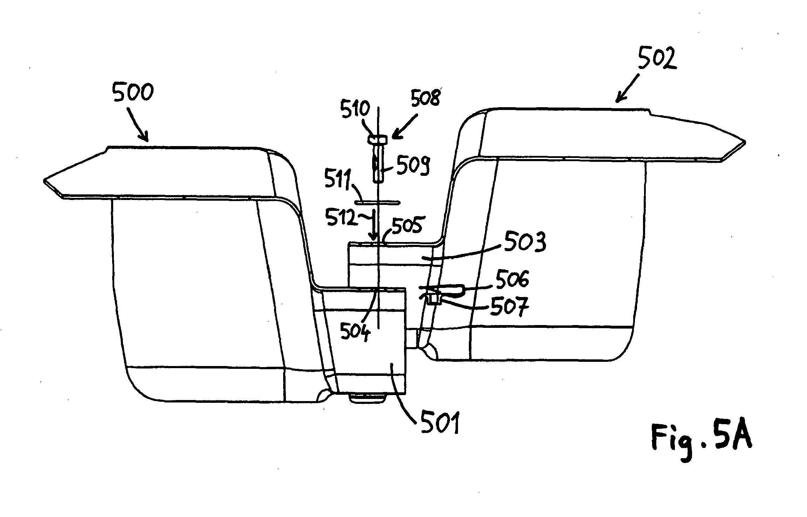

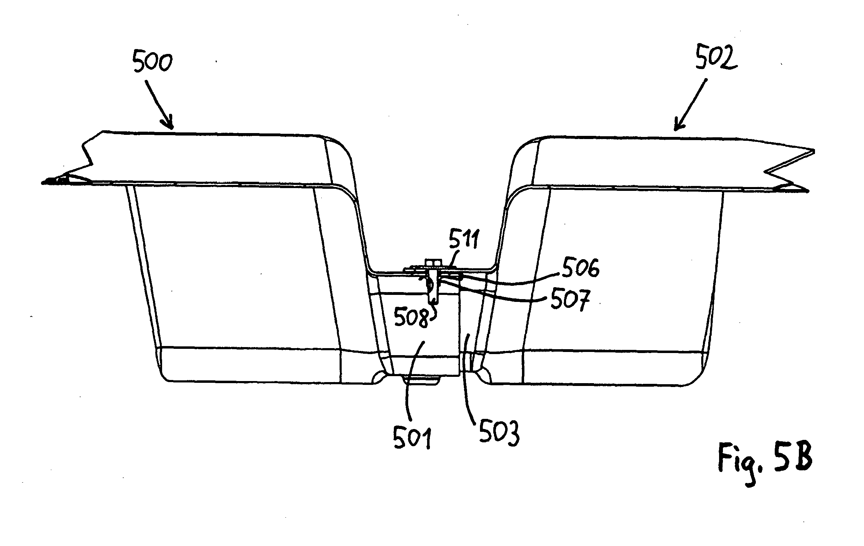

Anhand von Fig. 5A und Fig. 5B wird im Folgenden erläutert, wie zwei benachbarte Trägereinheiten mit Hilfe von Schraubverbindungen miteinander verbunden werden. In der Schnittzeichnung von Fig. 5A ist eine erste Trägereinheit 500 mit einem ersten Verbindungsflansch 501 zu erkennen. Benachbart zu der ersten Trägereinheit 500 ist eine zweite Trägereinheit 502 mit einem zweiten Verbindungsflansch 503 angeordnet. Der zweite Verbindungsflansch 503 soll mittels mindestens einer Schraubverbindung mit dem ersten Verbindungsflansch 501 verbunden werden. Hierzu weisen sowohl der erste Verbindungsflansch 501 als auch der zweite Verbindungsflansch 503 jeweils Bohrungen 504, 505 für eine Schraube auf. Auf den ersten Verbindungsflansch 501 wird von der Seite aus ein Befestigungsclip 506 aufgesteckt, an dessen Unterseite eine Mutter 507 angebracht ist, in die die Schraube eingeschraubt wird. Die zweite Trägereinheit 502 wird relativ zur ersten Trägereinheit 500 so positioniert, dass der zweite Verbindungsflansch 503 über dem ersten Verbindungsflansch 501 liegt und die Bohrung 505 im zweiten Verbindungsflansch 503 über der Bohrung 504 im ersten Verbindungsflansch 501 angeordnet ist. Auf die Bohrung 505 wird eine Beilagscheibe 511 gelegt. Anschließend wird der erste Verbindungsflansch 501 mit dem zweiten Verbindungsflansch 503 verschraubt. Die verwendete Schraube 508 mit dem Gewinde 509 und dem Kopf 510 ist in Fig. 5A gezeigt. Die Schraube 508 wird in Richtung des Pfeils 512 durch die Beilagscheibe 511 und die Bohrungen 505, 504 hindurch in die Mutter 507 eingeschraubt.

In Fig. 5B sind die erste Trägereinheit 500 und die zweite Trägereinheit 502 nach dem Verschrauben gezeigt. Die Schraube 508 verläuft durch die Beilagscheibe 511, die Bohrung 505 im zweiten Verbindungsflansch 503, die Bohrung 504 im ersten Verbindungsflansch 502 und die Mutter 507 des Befestigungsclips 506. Durch die Verschraubung wird eine formschlüssige Verbindung zwischen dem ersten Verbindungsflansch 501 und dem zweiten Verbindungsflansch 503 geschaffen.

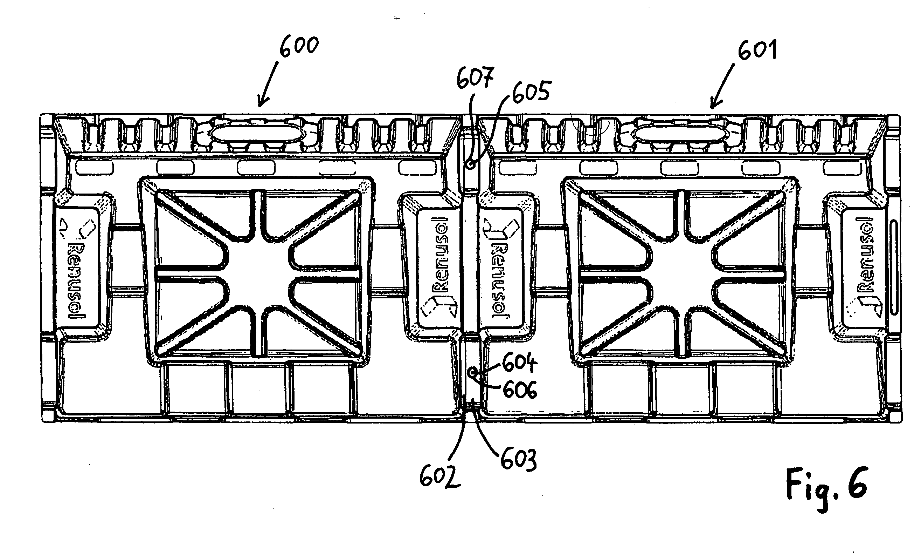

Alternativ zum Verschrauben können die Verbindungsflansche der beiden Trägereinheiten auch durch Vernieten miteinander verbunden werden. In Fig. 6 sind eine erste Trägereinheit 600 und eine zweite Trägereinheit 601 in Draufsicht gezeigt, welche durch Vernietung miteinander verbunden sind. Auf dem ersten Verbindungsflansch 602 der ersten Trägereinheit 600 liegt überlappend der zweite Verbindungsflansch 603 der zweiten Trägereinheit 601 auf. Die beiden Nieten 604, 605 erstrecken sich jeweils durch die Beilagscheiben 606 bzw. 607, den zweiten Verbindungsflansch 603 und den ersten Verbindungsflansch 602 hindurch und schaffen eine formschlüssige Verbindung zwischen dem ersten Verbindungsflansch 602 und dem zweiten Verbindungsflansch 603.

Dabei wird die Vernietung vorzugsweise allein von der Oberseite der Trägereinheiten 600, 601 aus durchgeführt. Zum Vernieten der beiden Trägereinheiten 600, 601 ist es daher nicht erforderlich, die Trägereinheiten 600, 601 anzuheben oder umzudrehen. Die Möglichkeit, die Nietverbindung nur von der Oberseite aus durchzuführen, ohne auf die Unterseite der Trägereinheiten 600, 601 zugreifen zu müssen, stellt einen wesentlichen Vorteil der Nietverbindung gegenüber anderen Verbindungstechniken dar. Dadurch kann das Aufstellen und Vernieten der Trägereinheiten sehr zügig durchgeführt werden.

Zum Aufstellen einer Reihe von Trägereinheiten wird eine neue Trägereinheit neben eine bereits fixierte Trägereinheit gestellt, wobei der Verbindungsflansch der neuen Trägereinheit auf dem Verbindungsflansch der bereits fixierten Trägereinheit aufliegt. Anschließend werden die beiden Trägereinheiten von der Oberseite her mittels eines geeigneten Nietwerkzeugs durch Nietverbindungen verbunden. Anschließend kann eine weitere Trägereinheit hinzugefügt und fixiert werden.

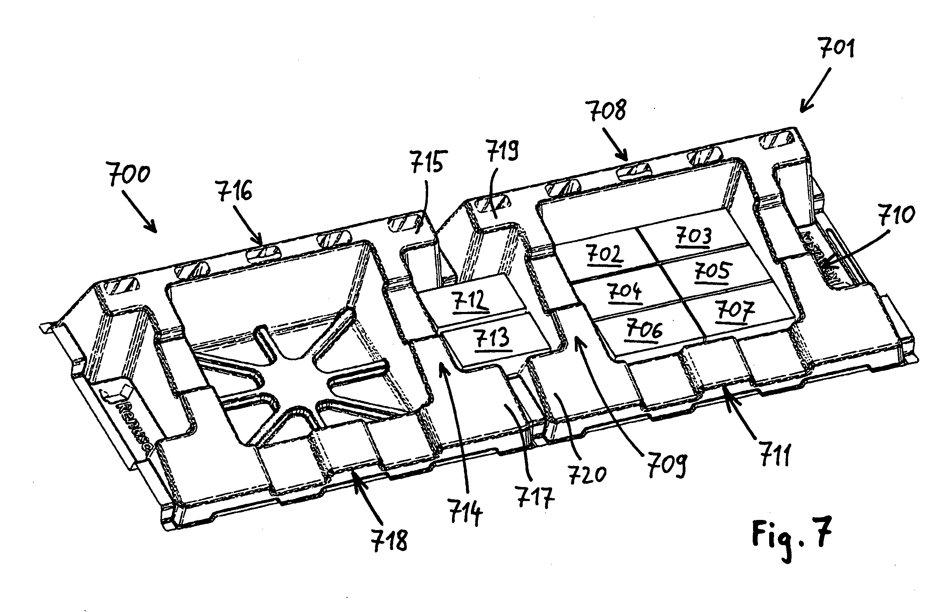

Nach dem Aufstellen und Verschrauben bzw. Vernieten der Trägereinheiten werden die Trägereinheiten mit Beschwermaterial gefüllt, um eine ausreichende Standfestigkeit zu erzielen. In Fig. 7 sind eine erste Trägereinheit 700 und eine zweite Trägereinheit 701 dargestellt, welche miteinander verschraubt, vernietet oder verklipst sind. Im Innenbereich der zweiten Trägereinheit 701 befinden sich sechs Beschwerungssteine 702-707. Der Innenbereich der zweiten Trägereinheit 701 wird von einem rückwärtigen Wandelement 708, zwei seitlichen Wandelementen 709, 710 und einem vorderen Wandelement 711 umschlossen. Durch die Wandelemente 708-711 werden die Beschwerungssteine 702-707 fixiert und am Verrutschen gehindert.

Zusätzlich zu den Beschwerungssteinen 702-707 im Innenbereich der zweiten Trägereinheit 701 werden auch in den Zwischenbereich zwischen den beiden Trägereinheiten 700 und 701 zwei Beschwerungssteine 712, 713 eingebracht. Durch diese zusätzlichen Beschwerungssteine 712, 713 wird die Standfestigkeit der aus den beiden Trägereinheiten 700 und 701 bestehenden Anordnung weiter verbessert.

Die beiden Beschwerungssteine 712, 713 liegen zum einen auf einer außen an das rechte Wandelement 714 der ersten Trägereinheit 700 angeformten Bodenplatte auf. Außerdem liegen die Beschwerungssteine auf einer außen an das linke Wandelement 709 der zweiten Trägereinheit 701 angeformten Bodenplatte auf.

Die beiden Beschwerungssteine 712, 713 im Zwischenbereich zwischen den beiden Trägereinheiten 700, 701 werden sowohl durch die Wandelemente der ersten Trägereinheit 700 als auch durch die Wandelemente der zweiten Trägereinheit 701 fixiert. Von Seiten der ersten Trägereinheit 700 aus werden die beiden Beschwerungssteine 712, 713 insbesondere durch das rechte Wandelement 714, durch den Fortsatz 715 des rückwärtigen Wandelements 716 sowie durch den Fortsatz 717 des vorderen Wandelements 718 der ersten Trägereinheit 700 fixiert. Von Seiten der zweiten Trägereinheit 701 aus werden die beiden Beschwerungssteine 712, 713 insbesondere durch das linke Wandelement 709, durch den Fortsatz 719 des rückwärtigen Wandelements 708 sowie durch den Fortsatz 720 des vorderen Wandelements 711 der zweiten Trägereinheit 701 fixiert.

Obwohl die beiden Beschwerungssteine 712, 713 im Zwischenbereich zwischen den beiden Trägereinheiten 700, 701 angeordnet sind, werden die Beschwerungssteine 712, 713 durch die seitlichen Wandelemente 709, 714 und die Fortsätze 715, 717, 719, 720 zumindest zum Teil von allen Seiten her umschlossen und dadurch am Verrutschen gehindert. Insbesondere durch die Fortsätze 715, 717, 719, 720 sind die Beschwerungssteine 712, 713 im Zwischenbereich zwischen den beiden Trägereinheiten auch bei starkem Wind sicher fixiert.

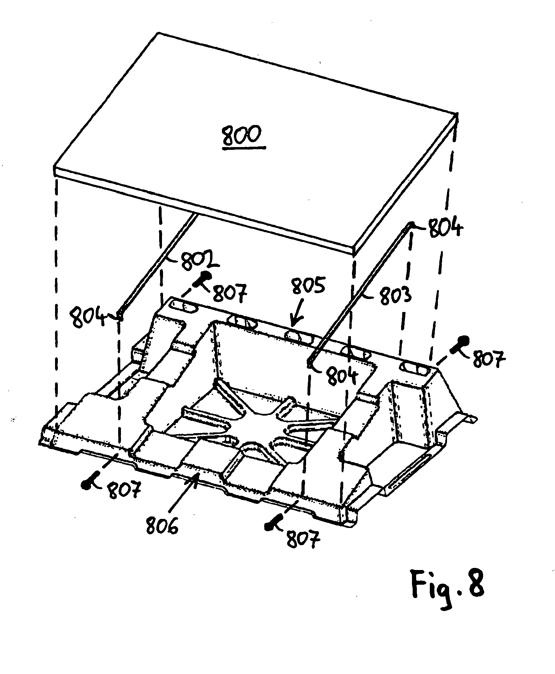

In Fig. 8 ist gezeigt, wie ein Solarmodul 800 auf einer erfindungsgemäßen Trägereinheit 801 montiert wird. Hierzu werden in einem ersten Schritt zwei Längsträger 802, 803 von unten an das Solarmodul 800 montiert. Die beiden Längsträger 802, 803 können beispielsweise an der Unterseite des Solarmoduls 800 festgeschraubt werden.

Anschließend wird die Einheit bestehend aus dem Solarmodul 800 und den an der Unterseite des Solarmoduls 800 festgeschraubten Längsträgern 802, 803 auf die schräg geneigte Auflagefläche der Trägereinheit 801 aufgesetzt. Die beiden Längsträger 802, 803 weisen abgewinkelte Enden 804 auf. Mit diesen abgewinkelten Enden 804 liegen die Längsträger 802, 803 auf dem rückwärtigen Wandelement 805 und auf dem vorderen Wandelement 806 der Trägereinheit 801 auf. Auf diese Weise wird die aus dem Solarmodul 800 und den Längsträgern 802, 803 bestehende Einheit auf der Trägereinheit 801 in einer festgelegten Position arretiert. Anschließend werden die beiden Längsträger 802, 803 beispielsweise mittels Nietverbindungen an der Trägereinheit 801 montiert. Hierzu werden die abgewinkelten Enden 804 der Längsträger 802, 803 mit Hilfe von vier Nieten 807 mit der Trägereinheit 801 vernietet. Diese Vernietung kann mit Hilfe eines geeigneten Nietwerkzeugs einseitig von oben bzw. von der Seite aus durchgeführt werden, so dass es nicht erforderlich ist, die Trägereinheit 801 während der Montage anzuheben oder umzudrehen.

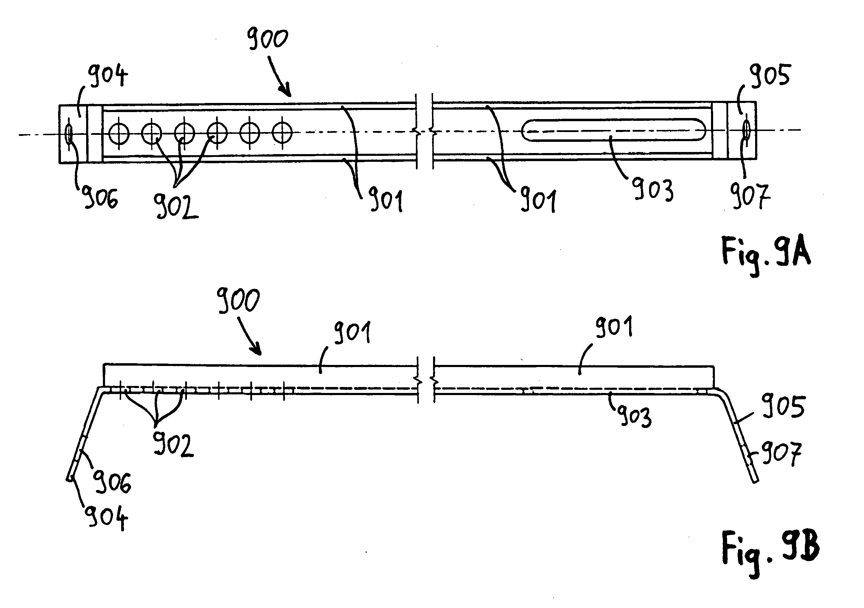

In Fig. 9A ist ein Längsträger 900 in Draufsicht dargestellt, während in Fig. 9B eine Seitenansicht des Längsträgers 900 gezeigt ist. Der Längsträger 900 weist Randstege 901 auf, auf denen später das Solarmodul mit seiner Unterseite aufliegt. Um den Längsträger 900 mit dem Solarmodul verschrauben zu können, weist der Längsträger 900 Bohrungen 902 sowie ein Langloch 903 auf. Auf der linken Seite des Längsträgers 900 befindet sich ein erstes abgewinkeltes Ende 904, und auf der rechten Seite des Längsträgers 900 befindet sich ein zweites abgewinkeltes Ende 905. Das erste abgewinkelte Ende 904 ist dazu ausgebildet, mit dem vorderen Wandelement der Trägereinheit vernietet, verschraubt oder anderweitig verbunden zu werden. Hierzu weist das erste abgewinkelte Ende 904 eine Bohrung 906 auf. Das zweite abgewinkelte Ende 905 ist dazu ausgebildet, mit dem rückwärtigen Wandelement der Trägereinheit vernietet, verschraubt oder anderweitig verbunden zu werden. Hierzu weist das zweite abgewinkelte Ende 905 eine Bohrung 907 auf.

## Patentansprüche

1. Trägereinheit (100) zur Montage von mindestens einem Solarmodul, wobei die Trägereinheit aufweist:
- eine Grundplatte (101), und
- ein rückwärtiges Wandelement (103), zwei seitliche Wandelemente (104, 105) sowie ein vorderes Wandelement (106), welche die Grundplatte (101) umschließen,
wobei die Grundplatte (101) zusammen mit dem rückwärtigen Wandelement (103), den seitlichen Wandelementen (104, 105) und dem vorderen Wandelement (106) einen wannenförmigen Innenbereich zur Aufnahme von Beschwermaterial bildet,
wobei die Wandelemente (103-106) als nach unten offene Hohlformkörper ausgebildet sind, welche jeweils eine Innenwand (107, 114, 117, 120) und eine beabstandet zur Innenwand angeordnete Außenwand (109, 116, 119, 122) umfassen,
und wobei die Trägereinheit als Formteil ausgebildet ist,
**dadurch gekennzeichnet, dass** das rückwärtige Wandelement (103), die seitlichen Wandelemente (104, 105) und das vordere Wandelement (106) zusammen eine geneigte Auflagefläche zur Montage des mindestens einen Solarmoduls (800) bilden,
und dass das rückwärtige Wandelement (103) mindestens eine Lüftungsöffnung (113) aufweist, welche einen Luftaustausch zwischen einem unterhalb des Formteils befindlichen Luftvolumen und der Außenluft ermöglicht.

2. Trägereinheit nach Anspruch 1, **dadurch gekennzeichnet, dass** sich, wenn Wind an der mindestens einen Lüftungsöffnung (113) vorbeiströmt, im Inneren der Trägereinheit ein Unterdruck aufbaut, der die Trägereinheit zusätzlich gegen den Untergrund drückt.

3. Trägereinheit nach Anspruch 1 oder 2, **dadurch gekennzeichnet, dass** mindestens eine Außenwand der Trägereinheit als nach innen geneigte Außenwand ausgebildet ist.

4. Trägereinheit nach Anspruch 3, **gekennzeichnet durch** mindestens eines der folgenden Merkmale:
- die nach innen geneigte Außenwand schließt einen Winkel zwischen 55° und 80° mit der Horizontalen ein;
- beim Auftreffen von Wind auf die nach innen geneigte Außenwand entsteht eine Kraftkomponente, welche die Trägereinheit zusätzlich gegen einen jeweiligen Untergrund drückt.

5. Trägereinheit nach einem der Ansprüche 1 bis 4, **dadurch gekennzeichnet, dass** seitlich an die Trägereinheit Verbindungsflansche angeformt sind, die dazu ausgebildet sind, mit seitlich angeformten Verbindungsflanschen einer benachbarten Trägereinheit verbunden zu werden.

6. Trägereinheit nach Anspruch 5, **dadurch gekennzeichnet, dass** die seitlich an die Trägereinheit angeformten Verbindungsflansche dazu ausgebildet sind, mit seitlich angeformten Verbindungsflanschen einer benachbarten Trägereinheit durch mindestens eines von: Verschrauben, Vernieten, Verklipsen verbunden zu werden.

7. Trägereinheit nach einem der Ansprüche 1 bis 6, **gekennzeichnet durch** mindestens eines der folgenden Merkmale:
- das rückwärtige Wandelement, die seitlichen Wandelemente und das vordere Wandelement sind mit der Grundplatte einstückig verbunden;
- die Trägereinheit ist als einstückiges Formteil ausgebildet;
- die Trägereinheit ist als einstückiges Formteil aus Kunststoff ausgebildet;
- die Trägereinheit ist so geformt, dass mehrere Trägereinheiten beim Aufeinanderstapeln vollständig ineinander geschoben werden können;
- die Trägereinheit ist als schachtelbares Formteil ausgebildet;
- die Trägereinheit ist als Formteil aus Polyethylen ausgebildet;
- die Trägereinheit ist mittels mindestens einem von Spritzgießen und Vakuumformen hergestellt;
- die Trägereinheit ist zur Montage von Solarmodulen auf einem Flachdach vorgesehen.

8. Trägereinheit nach einem der Ansprüche 1 bis 7, **dadurch gekennzeichnet, dass** das rückwärtige Wandelement, die seitlichen Wandelemente und das vordere Wandelement jeweils aufweisen:
- eine Innenwand, die mit der Grundplatte verbunden ist,
- einen Steg, der an der Oberseite des Wandelements angeordnet ist und die Innenwand mit einer Außenwand verbindet,
- eine beabstandet zur Innenwand angeordnete Außenwand.

9. Trägereinheit nach Anspruch 8, **gekennzeichnet durch** mindestens eines der folgenden Merkmale:
- die an der Oberseite der Wandelemente angeordneten Stege sind als - Auflage für das mindestens eine Solarmodul ausgebildet;
- die Stege der seitlichen Wandelemente fallen vom rückwärtigen Wandelement zum vorderen Wandelement hin schräg ab;
- die an der Oberseite der Wandelemente angeordneten Stege bilden zusammen eine geneigte Auflagefläche zur Montage des mindestens einen Solarmoduls.

10. Trägereinheit nach einem der Ansprüche 1 bis 9, **dadurch gekennzeichnet, dass** an mindestens einer Außenseite der seitlichen Wandelemente sich seitlich nach außen erstreckende Bodenplatten angeformt sind, die eine Auflage für zusätzliches, im Zwischenraum zwischen den Trägereinheiten angeordnetes Beschwermaterial bilden.

11. Trägereinheit nach Anspruch 10, **dadurch gekennzeichnet, dass** die an mindestens einer Außenseite der seitlichen Wandelemente angeformten Bodenplatten dazu ausgelegt sind, zusammen mit einer an eine benachbarte Trägereinheit angeformten Bodenplatte eine Auflage für zusätzliches, im Zwischenraum zwischen den Trägereinheiten angeordnetes Beschwermaterial zu bilden.

12. Trägereinheit nach Anspruch 10 oder Anspruch 11, **dadurch gekennzeichnet, dass** der Zwischenraum zwischen den Trägereinheiten zumindest teilweise durch Wandungselemente und durch Fortsätze von Wandungselementen begrenzt wird.

13. Trägereinheit nach einem der Ansprüche 1 bis 12, **dadurch gekennzeichnet, dass** sowohl in den wannenförmigen Innenbereich als auch in den Zwischenbereich zwischen den Trägereinheiten Beschwermaterial zur Beschwerung der Trägereinheiten einbringbar ist.

14. Anordnung aus einer Mehrzahl von Trägereinheiten gemäß einem der Ansprüche 1 bis 13, wobei die Trägereinheiten über seitlich angeformte Verbindungsflansche miteinander verbundenen sind.

15. Verfahren zum Aufstellen von Trägereinheiten (100) nach einem der vorhergehenden Ansprüche, wobei das Verfahren aufweist:
- Positionieren einer Trägereinheit (100) nach einem der vorhergehenden Ansprüche neben einer benachbarten Trägereinheit nach einem der vorhergehenden Ansprüche, wobei sich ein seitlich an die Trägereinheit angebrachter Verbindungsflansch (126, 128) zumindest teilweise mit einem seitlichen Verbindungsflansch der benachbarten Trägereinheit überdeckt;
- Herstellen einer Verbindung zwischen dem seitlichen Verbindungsflansch (126, 128) der Trägereinheit (100) und dem seitlichen Verbindungsflansch der benachbarten Trägereinheit.

16. Verfahren nach Anspruch 15, **gekennzeichnet durch** folgenden zusätzlichen Schritt:
- Einbringen von Beschwermaterial in einen Zwischenraum zwischen den benachbarten Trägereinheiten.

## Claims

1. Support unit (100) for mounting at least one solar module, wherein the support unit comprises:
- a base tile (101), and
- a retral wall element (103), two lateral wall elements (104, 105) as well as a front wall element (106) which enclose the base tile (101),
wherein the base tile (101) together with the retral wall element (103), the lateral wall elements (104, 105), and the front wall element (106), forms a trough-shaped interior for receiving ballast,
wherein the wall elements (103-106) are designed as hollow moulded bodies downwardly open, each containing an inner wall (107, 114, 117, 120) and an outer wall (109, 116, 119, 122), which is spaced apart from the inner wall,
and wherein the support unit is designed as a moulded part,
**characterized in that** the retral wall element (103), the lateral wall elements (104, 105), and the front wall element (106) together form a slanted support surface for mounting the at least one solar module (800),
and **in that** the retral wall element (103) comprises at least one ventilation opening (113), which allows for air exchange between an air volume situated below the moulded part and the ambient air.

2. Support unit according to claim 1, **characterized in that** in the interior of the support unit a low pressure builds up, which additionally pushes the support unit against the underground, when wind flows past the at least one ventilation opening (113).

3. Support unit according to claim 1 or 2, **characterized in that** at least one outer wall of the support unit is formed as an inwardly slanted outer wall.

4. Support unit according to claim 3, **characterized by** at least one of the following features:
- the inwardly slanted outer wall includes an angle between 55° and 80° with the horizontal;
- a force component is generated due to wind hitting onto the inwardly slanted outer wall, which additionally pushes the support unit against the respective underground.

5. Support unit according to one of claims 1 to 4, **characterized in that** connecting flanges are formed laterally to the support unit, which are configured for being connected with laterally formed connecting flanges of an adjacent support unit.

6. Support unit according to claim 5, **characterized in that** the connecting flanges formed laterally to the support unit are configured for being connected with laterally formed connecting flanges of an adjacent support unit by at least one of screwing, riveting, clipping.

7. Support unit according to one of claims 1 to 6, **characterized by** at least one of the following features:
- the retral wall element, the lateral wall elements and the front wall element are integrally connected with the base tile;
- the support unit is formed as an integral moulded part;
- the support unit is formed as an integral moulded part made of plastic;
- the support unit is formed such that multiple support units may be nested completely into another, when being stacked on top of each other;
- the support unit is formed as a nestable moulded part;
- the support unit is formed as a moulded part made of polyethylene;
- the support unit is manufactured by at least one of injection moulding and vacuum moulding;
- the support unit is configured for mounting of solar modules on a flat roof.

8. Support unit according to one of claims 1 to 7, **characterized in that** the retral wall element, the lateral wall elements, and the front wall element each comprise:
- an inner wall, which is connected to the base tile,
- a fixed link, which is located at the upper side of the wall element and connects the inner wall with an outer wall,
- an outer wall spaced apart from the inner wall.

9. Support unit according to claim 8, **characterized by** at least one of the following features:
- the fixed links formed at the upper side of the wall elements are designed as support for the at least one solar module;
- the fixed links of the lateral wall elements fall off from the retral wall element toward the front wall element in a slanted way;
- the fixed links formed at the upper side of the wall elements together form a slanted support surface for mounting the at least one solar module.

10. Support unit according to one of claims 1 to 9, **characterized in that** at at least one outer side of the lateral wall elements bottom tiles are formed laterally outwardly extending, which form a support for additional ballast provided in the interspace between the support units.

11. Support unit according to claim 10, **characterized in that** the bottom tiles formed at at least one outer side of the lateral wall elements are configured for forming, together with a bottom tile formed to an adjacent support unit, a support for additional ballast provided in the interspace between the support units.

12. Support unit according to claim 10 or claim 11, **characterized in that** the interspace between the support units is confined at least partially by wall elements and by prolongations of wall elements.

13. Support unit according to one of claims 1 to 12, **characterized in that** in both the trough-shaped interior and the interspace between the support units ballast for loading the support unit is insertable.

14. Arrangement of a plurality of support units according to one of claims 1 to 13, wherein the support units are interconnected by means of connecting flanges formed laterally.

15. Method for placing of support units (100) according to one of the preceding claims, wherein the method comprises:
- positioning of a support unit (100) according to one of the preceding claims next to an adjacent support unit according to one of the preceding claims, wherein a connecting flange (126, 128) laterally attached to the support unit at least partially overlaps with a lateral connecting flange of an adjacent support unit;
- establishing a connection between the lateral connecting flange (126, 128) of the support unit (100) and the lateral connecting flange of the adjacent support unit.

16. Method according to claim 15, **characterized by** the following additional step:
- inserting of ballast into an interspace between the adjacent support units.

## Revendications

1. Unité de support (100) pour le montage d'au moins un module solaire, l'unité de support présentant :
- une plaque de base (101), et
- un élément de paroi arrière (103), deux éléments de paroi latéraux (104, 105) ainsi qu'un élément de paroi avant (106) qui entourent la plaque de base (101),
la plaque de base (101) formant conjointement avec l'élément de paroi arrière (103) les éléments de paroi latéraux (104, 105) et l'élément de paroi avant (106) formant une zone intérieure en forme de cuvette pour la réception de matériau de charge,
les éléments de paroi (103-106) étant réalisés comme des corps moulés creux ouverts vers le bas qui comportent respectivement une paroi intérieure (107, 114, 117, 120) et une paroi extérieure (109, 116, 119, 122) agencée à distance de la paroi intérieure, et l'unité de support étant réalisée comme une partie moulée,
**caractérisée en ce que** l'élément de paroi arrière (103), les éléments de paroi latéraux (104, 105) et l'élément de paroi avant (106) forment ensemble une surface d'appui inclinée pour le montage de l'au moins un module solaire (800),
et **en ce que** l'élément de paroi arrière (103) présente au moins une ouverture de ventilation (113) qui permet un échange d'air entre un volume d'air se trouvant sous la partie moulée et l'air extérieur.

2. Unité de support selon la revendication 1, **caractérisée en ce que**, lorsque du vent passe devant l'au moins une ouverture de ventilation (113), une dépression, qui presse en outre l'unité de support contre le fond, se constitue à l'intérieur de l'unité de support.

3. Unité de support selon la revendication 1 ou 2, **caractérisée en ce qu'**au moins une paroi extérieure de l'unité de support est réalisée comme une paroi extérieure inclinée vers l'intérieur.

4. Unité de support selon la revendication 3, **caractérisée par** au moins l'une des caractéristiques suivantes :
- la paroi extérieure inclinée vers l'intérieur forme un angle compris entre 55 et 80° par rapport à l'horizontale ;
- une composante de force, qui presse en outre l'unité de support contre un fond respectif, apparaît lors de l'impact du vent sur la paroi extérieure inclinée vers l'intérieur.

5. Unité de support selon l'une quelconque des revendications 1 à 4, **caractérisée en ce que** des brides de liaison, qui sont réalisées afin d'être reliées avec des brides de liaison formées latéralement d'une unité de support contigüe, sont formées latéralement sur l'unité de support.

6. Unité de support selon la revendication 5, **caractérisée en ce que** les brides de liaison formées latéralement sur l'unité de support sont réalisées afin d'être reliées avec des brides de liaison formées latéralement d'une unité de support contiguë par au moins un parmi : un vissage, un rivetage, un clipsage.

7. Unité de support selon l'une quelconque des revendications 1 à 6, **caractérisée par** au moins l'une des caractéristiques suivantes :
- l'élément de paroi arrière, les éléments de paroi latéraux et l'élément de paroi avant sont reliés d'un seul tenant avec la plaque de base ;
- l'unité de support est réalisée comme une partie moulée d'un seul tenant ;
- l'unité de support est réalisée comme une partie moulée d'un seul tenant en plastique ;
- l'unité de support est formée de sorte que plusieurs unités de support puissent être complètement poussées l'une dans l'autre lors de l'empilement ;
- l'unité de support est réalisée comme une partie moulée emboîtable ;
- l'unité de support est réalisée comme une partie moulée en polyéthylène ;
- l'unité de support est fabriquée par au moins un parmi un moulage par injection et une formation sous vide ;
- l'unité de support est prévue pour le montage de modules solaires sur un toit plat.

8. Unité de support selon l'une quelconque des revendications 1 à 7, **caractérisée en ce que** l'élément de paroi arrière, les éléments de paroi latéraux et l'élément de paroi avant présentent chacun :
- une paroi intérieure qui est reliée à la plaque de base,
- une traverse qui est agencée sur le côté supérieur de l'élément de paroi et relie la paroi intérieure à une paroi extérieure,
- une paroi extérieure agencée à distance de la paroi intérieure.

9. Unité de support selon la revendication 8, **caractérisée par** au moins l'une des caractéristiques suivantes :
- les traverses agencées sur le côté supérieur des éléments de paroi sont réalisées comme appui pour l'au moins un module solaire ;
- les traverses des éléments de paroi latéraux tombent en biais de l'élément de paroi arrière à l'élément de paroi avant ;
- les traverses agencées sur le côté supérieur des éléments de paroi forment ensemble une surface d'appui inclinée pour le montage de l'au moins un module solaire.

10. Unité de support selon l'une quelconque des revendications 1 à 9, **caractérisée en ce que** des plaques de fond s'étendant latéralement vers l'extérieur sont formées sur au moins un côté extérieur des éléments de paroi latéraux, lesquelles forment un appui pour du matériel de charge supplémentaire, agencé dans l'espace intermédiaire entre les unités de support.

11. Unité de support selon la revendication 10, **caractérisée en ce que** les plaques de fond formées sur au moins un côté extérieur des éléments de paroi latéraux sont conçues afin de former conjointement avec une plaque de fond formée sur une unité de support contigüe un appui pour du matériel de charge supplémentaire, agencé dans l'espace intermédiaire entre les unités de support.

12. Unité de support selon la revendication 10 ou 11, **caractérisée en ce que** l'espace intermédiaire entre les unités de support est délimitée au moins en partie par des éléments de paroi et par des prolongements des éléments de paroi.

13. Unité de support selon l'une quelconque des revendications 1 à 12, **caractérisée en ce que**, non seulement dans la zone intérieure en forme de cuvette, mais aussi dans la zone intermédiaire entre les unités de support, du matériel de charge peut être introduit pour charger les unités de support.

14. Agencement d'une pluralité d'unités de support selon l'une quelconque des revendications 1 à 13, les unités de support étant reliées entre elles par des brides de liaison formées latéralement.

15. Procédé de placement d'unités de support (100) selon l'une quelconque des revendications précédentes, le procédé présentant :
- le positionnement d'une unité de support (100) selon l'une quelconque des revendications à côté d'une unité de support contiguë selon l'une quelconque des revendications précédentes, une bride de liaison (126, 128) montée latéralement sur l'unité de support étant recouverte au moins en partie par une bride de liaison latérale de l'unité de support contiguë ;
- la fabrication d'une liaison entre la bride de liaison (126, 128) latérale de l'unité de support (100) et la bride de liaison latérale de l'unité de support contiguë.

16. Procédé selon la revendication 15, **caractérisé par** l'étape supplémentaire suivante :
- l'introduction de matériel de charge dans un espace intermédiaire entre les unités de support contiguës.
